Europäisches Patentamt

European Patent Office

Office européen des brevets

(19)

(11) Veröffentlichungsnummer: **0 166 116**
**A2**

(12) **EUROPÄISCHE PATENTANMELDUNG**

(21) Anmeldenummer: 85105183.9

(22) Anmeldetag: 27.04.85

(51) Int. Cl.⁴: **A 01 F 12/40,** A 01 F 12/52,
A 01 D 41/00, A 01 D 41/12

(30) Priorität: 27.04.84 DE 3415708

(43) Veröffentlichungstag der Anmeldung: 02.01.86
Patentblatt 86/1

(84) Benannte Vertragsstaaten: BE DE FR GB IT SE

(71) Anmelder: BISO Bitter GmbH & Co KG,
D-4520 Melle 8 (DE)

(72) Erfinder: Schmitt, Helwig, Raiffeisenstrasse 5,
D-3523 Grebenstein (DE)
Erfinder: Scharf, Alois, Kohneweg 7, D-4520 Melle 8 St.
Annen (DE)

(74) Vertreter: Hoefer, Theodor, Dipl.-Ing., Kreuzstrasse 32,
D-4800 Bielefeld 1 (DE)

(54) **Mähdrescher.**

(57) Bei einem Mähdrescher (10), der das von Körnern getrennte Stroh mittels eines Schüttlers (11) zum rückwärtigen Ausgang transportiert und bei dem die noch vorhandenen Körner einem Siebkasten (12) zugeführt werden, wird das Stroh einem am rückwärtigen Ausgang des Mähdreschers lösbar befestigten Häcksler (14) zum Zerkleinern zugeführt. Der in diesem Häcksler (14) gelagerten Messerwelle (17) mit Messerkamm (31), die von einem Gehäuse (45) umgeben sind, ist eine Stroh-Beschleunigertrommel (16) mit die noch vorhandenen Restkörner abscheidenden Siebflächen (15) vorgelagert.

Diese Siebflächen (15) bilden gleichzeitig die Leitflächen für die Zuführung des Strohes zu der Stroh-Beschleunigertrommel (16), wobei der Siebfläche (15) eine untenseitige Wanne (18) zum Auffangen der Restkörner zugeordnet ist. Eine in dieser Wanne (18) gelagerte Förderschnecke (20) transportiert die Restkörner in einen seitlichen Wurfelevator (21), der die Restkörner über einen Schacht (38) dem Siebkasten (12) wieder zuführt.

**Patentanwalt**

# Dipl.-Ing. Th. Hoefer

4800 Bielefeld 1, den
Kreuzstraße 32
Telefon (05 21) 17 10 72 - Telex 9 - 32 449

Bankkonten: Commerzbank AG, Bielefeld 6 851 471 (BLZ 480 400 35)
Sparkasse Bielefeld 72 001 563 (BLZ 480 501 61)
Postscheckkonto: Amt Hannover 689 28-304

Zugelassener Vertreter beim Europäischen Patentamt
Prof. Representative before the European Patent Office
Mandataire agréé près l'Office européen des brevets

**0166116**

Diess.Akt.Z.: E 42

Firma BISO Bitter GmbH & Co.KG, 4520 Melle 8

Mähdrescher

Die Erfindung bezieht sich auf einen Mähdrescher mit das
Korn abscheidenden Schüttlern und Sieben.

Durch die ständig steigenden Kornerträge und die z.T.
noch unausgereiften Strohmassen werden die Kornabscheidevorrichtungen des Mähdreschers, besonders der bzw. die
Schüttler stark belastet, so daß oft nicht alle Körner

- 2 -

abgeschieden werden und zusammen mit dem Stroh auf den Acker fallen oder von einem angehängten Strohhäcksler zusammen mit dem Strohhäcksel auf dem Boden verteilt werden.

Da die bisher verwendeten Schüttler nur eine begrenzte Kornabscheidung bringen, so liegt die Aufgabe der Erfindung darin, eine zusätzliche Vorrichtung zum Anbau an übliche Mähdrescher zu schaffen, mit der auch Restkorn abgeschieden werden kann, so daß nur Stroh dem Häcksler zugeführt wird.

Diese Aufgabe wird durch die Merkmale der Patentansprüche gelöst.

Eine derartige Vorrichtung zeigt beachtliche Vorteile und zwar u.a. durch die zusätzliche Beschleunigung des aus dem Mähdrescher austretenden Strohes eine vollständige Abscheidung des Restkornes. Die verwendete Stroh-Beschleunigertrommel zeichnet sich durch einen hohen Wirkungsgrad aus, da durch die Beschleunigung das Stroh auseinandergezogen wird und die schwereren Körner sich lösen und in nachgeschaltete Siebe und/oder Fördereinrichtungen fallen.

Zur besonders guten Strohförderung und zur Vermeidung von Strohwicklern ist es besonders bevorzugt, die Stroh-Beschleunigertrommel und die Messer des nachgeschalteten Häckslers miteinander kämmen zu lassen. Dazu sind die Achse der Beschleunigertrommel und die Messerwelle des Häckslers in einem geringeren Abstand zueinander gelagert als die Summe der Umfangsradien beider Einrichtungen ausmacht.

Es liegt im Rahmen der Erfindung, anstelle eines nachgeschalteten Strohhäckslers auch nur eine Strohverteilertrommel vorzusehen.

Die Erfindung erstreckt sich nicht nur auf die Einzelmerkmale, sondern auch auf deren vorteilhafte Kombination.

0166116

Auf der Zeichnung sind Ausführungsbeispiele der Erfindung dargestellt und nachfolgend näher beschrieben. Es zeigen:

Fig.1    eine Seitenansicht eines Mähdreschers mit einem rückseitigen Häcksler mit Messerwelle, der einer Stroh-Beschleunigertrommel vorgelagert ist, teilweise geschnitten;

Fig.2    einen senkrechten Schnitt durch denselben Häcksler mit oberhalb der Messerwelle angeordneter Stroh-Beschleunigertrommel;

Fig.3    eine Draufsicht eines Teilbereiches der Stroh-Beschleunigertrommel mit versetzt ineinandergreifender Messerwelle;

Fig.4    einen senkrechten Schnitt durch einen Häcksler mit schräg zum Schüttler gerichteter Stroh-Beschleunigertrommel und einer einstellbaren Klappe;

Fig.5    einen senkrechten Schnitt durch denselben Häcksler mit im Abstand zur Messerwelle gelagerter Stroh-Beschleunigertrommel und dieser vorgelagerter Abscheidetrommel;

Fig.6    eine perspektivische Ansicht einer abgeänderten Leitfläche (Sieb), die von zwei Quertraversen mit im Abstand nebeneinander befestigten Stäben gebildet ist.

Fig.7    eine Seitenansicht des Mähdreschers gemäß

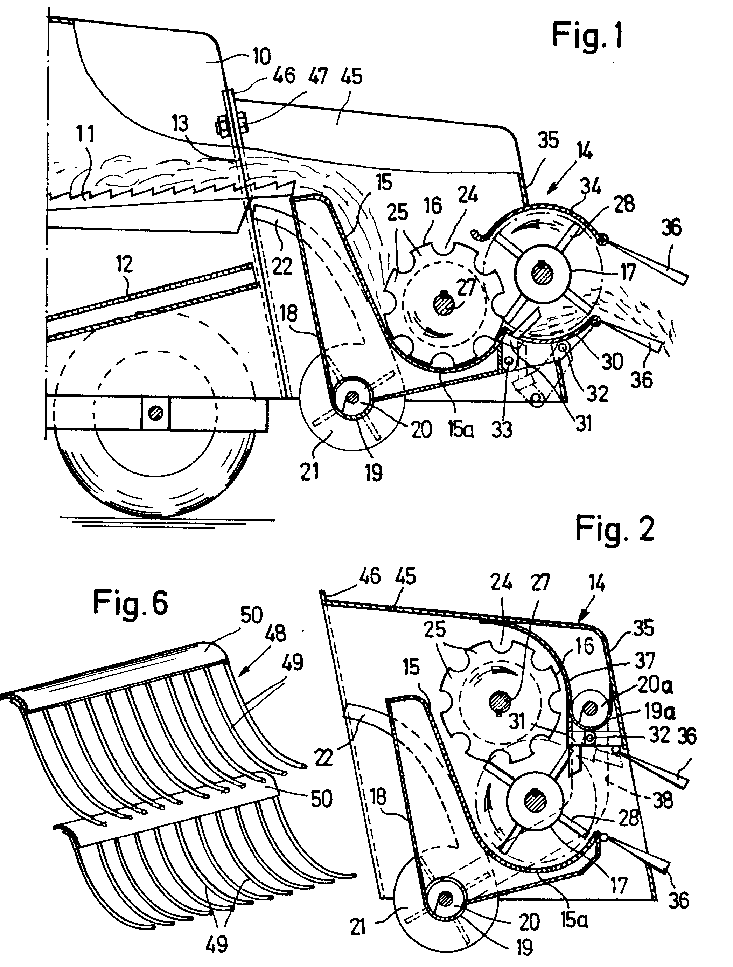

        Fig.1 mit abschwenkbarer Wanne und Führungsblech mit Messerkamm;

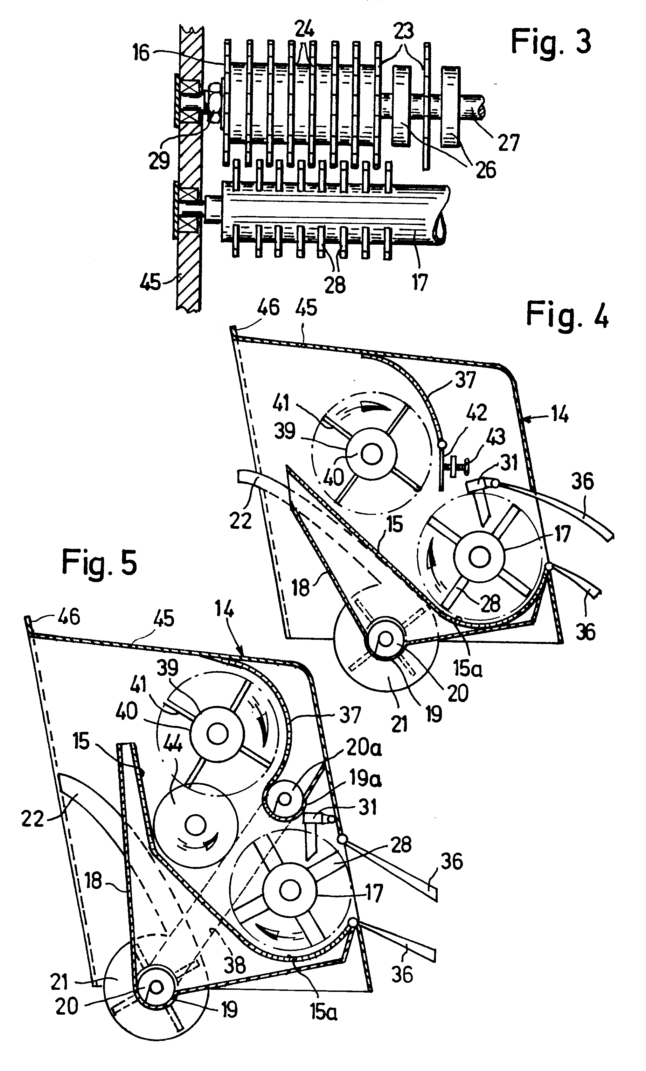

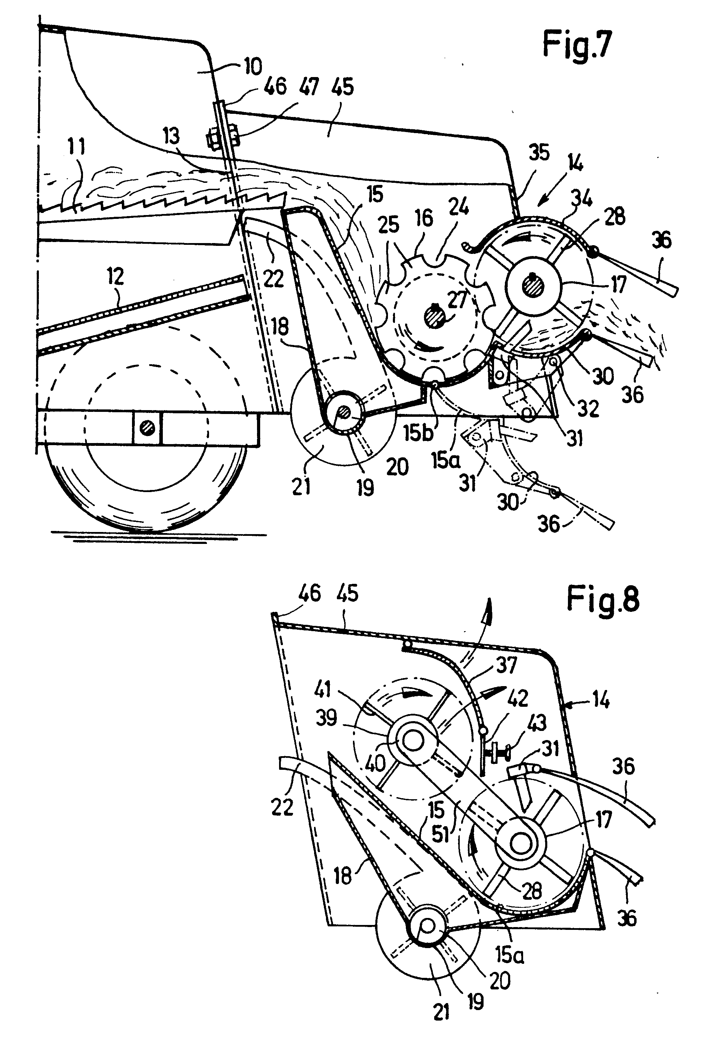

Fig.8    einen senkrechten Schnitt durch den Häcksler gemäß Fig.4 mit verschwenkbarer Beschleunigertrommel und zugeordnetem Sieb.

Mit 10 ist ein rückwärtiger Teil eines Mähdreschers
bezeichnet, bei dem das Gut beispielsweise in einer
quer zur Fahrtrichtung angeordneten Dreschtrommel (nicht
dargestellt) bearbeitet wird, d.h., die Körner werden
vom Stroh getrennt und das Stroh anschließend auf nachgeschaltete, etwa waagerecht liegende Schüttler 11 geworfen. Durch die Bewegung dieser Schüttler 11 werden
dabei die noch vorhandenen losen Körner vom Stroh getrennt, während das Stroh zum rückwärtigen Ausgang des
Mähdreschers weitertransportiert wird. Die Körner fallen
durch den Schüttler 11 auf einen darunter angeordneten
Siebkasten 12, der zu einem Sammelbehälter führt (nicht
dargestellt). Die Schüttler 11 erstrecken sich bis zum
rückwärtigen Ausgang des Mähdreschers 10, durch welchen
dann das Stroh durch eine Öffnung 13 auf das frisch
gemähte Feld abfallen kann (Fig.7) oder aber - wie in
Fig.1, 2, 4, 5, 7, 8 dargestellt - an dem ein Häcksler
14 befestigt ist, dem das Stroh zum Zerkleinern zugeführt wird.

Dieses vollständige Trennen der Körner vom Stroh ist
nicht immer gewährleistet, besonders dann, wenn zu dichtes oder aber zu feuchtes Gut anfällt, so daß Restkörner wieder mit dem abfallenden Stroh auf das Feld gebracht werden.

0166116

- 6 -

Um diese Restkörner im Anschluß an die Schüttler 11 innerhalb des Häckslers 14 vom Stroh zu trennen, ist ein als Leitfläche ausgebildetes Sieb 15, das in seinem oberen Teil teilweise unter die Schüttler 11 faßt, im Häcksler 14 befestigt, das das abfallende Stroh zunächst auffängt. Dabei kann schon ein Teil der Restkörner durch das Sieb 15 fallen. Dieses Sieb 15 ist in seinem unteren Bereich teilkreisförmig zu einer Wanne 15a gebogen, in der im geringem Abstand eine Stroh mitnehmende Beschleunigertrommel 16 mit waagerechter Achse lagert (Fig.1).

Diese Stroh-Beschleunigertrommel 16 erfaßt das Stroh mit einer hohen Geschwindigkeit, beschleunigt es damit und führt es dann der Messerwelle 17 des Häckslers 14 zu. Während dieser Beschleunigung des Strohes werden die darin enthaltenen Restkörner auf Grund ihrer Trägheit durch ihr Gewicht vom Stroh abgerissen und gegen die Oberfläche der teilkreisförmigen Wanne 15a des Siebes 15 gedrückt und fallen durch dessen Sieblöcher hindurch. Unterhalb und rückseitig dieses Siebes 15 ist im Abstand etwa parallel dazu eine rechtwinklig gebogene Wand 18 gehalten, deren Schenkel einerseits in der waagerechten und andererseits in der senkrechten Ebene geneigt sind. Die Restkörner, die durch das Sieb 15 fallen, werden in diesem Behälter aufgefangen, der durch die Wand 18 gebildet ist. Im Biegungsbereich der beiden Schenkel des Siebes 15 bildet diese Wand 18 eine Rinne 19, in der eine Förderschnecke 20 mit waagerechter Achse lagert, welche die Restkörner zur Seite transportiert. Das Sieb 15 mit der darunter befindlichen Wand 18, ebenso wie auch die Förderschnecke 20 sind in ihrer Breite dem Häcksler 14 entsprechend ausgebildet.

- 7 -

Der Förderschnecke 20 schließt sich ein Wurfelevator 21 an, der die Restkörner über ein Führungsrohr 22 der Schüttler-Auffangmulde bzw. dem Siebkasten 12 des Mähdreschers 10 wieder zuführt.

Durch diese Stroh-Beschleunigertrommel 16 wird der Messerwelle 17 somit nur noch Stroh zugeführt.

Die zwischen der Messerwelle 17 des Häckslers 14 und dem Sieb 15 gelagerte Beschleunigertrommel 16 weist vorzugsweise kreisförmige Scheiben 23 auf, an deren Umfang mehrere, beispielsweise halbkreisförmige Ausstanzungen 24 unter Bildung von Zähnen 25 angeordnet sind. Zwischen jeder gezahnten Scheibe 23 lagert ein im Durchmesser kleinerer Distanzring 26 (Fig.3), die zusammen gemeinsam auf einer Keilwelle 27 unverdrehbar verspannt sind. Die Verspannung der Scheiben 23 und der Distanzringe 26 auf der Keilwelle 27 erfolgt beispielsweise durch endseitige lösbare Muttern 29, so daß im Bedarfsfall die Scheiben 23 leicht ausgewechselt werden können.

Die zwischen den Scheiben 23 angeordneten Distanzringe 26 ermöglichen ein Eingreifen der radial angeordneten Messer 28 der Messerwelle 17 zwischen den Scheiben 23 und verhindern ein Umwickeln des Strohes um die Distanzringe 26, wodurch ein einwandfreies Arbeiten gewährleistet wird (vergl. Fig.1-3 der Zeichnung).

Am auslaufenden Ende des teilkreisförmigen Siebes 15 (Fig.1) schließt sich unterhalb des Häckslers ein ebenfalls gebogenes Führungsblech 30 an, das im Abstand zu der Messerwelle 17 lagert. Im Übergangsbereich des

Siebes 15 und des Führungsblechs 30 ist ein Messerkamm 31 als Gegenlager für die Messerwelle 17 schwenkbar gelagert, der um eine Schwenkachse 32 und nach Lösen eines seitlichen Steckbolzens 33 aus der rotierenden Messerwelle 17 herausschwenkbar ist. Gegenüber dem Führungsblech 30 und zwar oberhalb des Häckslers lagert etwa waagerecht ein weiteres Führungsblech 34 für das Stroh. Beide Führungsbleche 30, 34 ragen von der Rückwand 35 des Häckslers 17 nach hinten heraus, und tragen an deren Enden jeweils ein schwenkbares Leitblech 36 zur Führung des Strohes.

In Fig.7 ist dieselbe Ausführung des in Fig.1 dargestellten rückseitigen Teiles eines Mähdreschers dargestellt. Dabei ist die Wanne 15a am unteren Ende des Siebes 15 angelenkt und zusammen mit dem starr daran befestigten Führungsblech 30 und dem ebenfalls daran starr befestigten Messerkamm 31 nach unten abschwenkbar, so daß in dieser (gestrichelt dargestellten) Stellung unterhalb der Beschleunigertrommel 16 ein breiter Spalt entsteht, durch den langes Stroh auf den Boden abgeworfen werden kann, ohne durch den Häcksler 14 zu rutschen.

Bei dem abgeänderten Ausführungsbeispiel nach Fig.2 lagert bei gleicher Grundausbildung wie Fig.1 die Messerwelle 17 des Häckslers 14 in der Siebwanne 15a, während die Stroh-Beschleunigertrommel 16 schräg oberhalb der Messerwelle 17 gelagert ist. Die Zähne 25 und die Messer 28 greifen ineinander. Die Drehrichtungen der Messerwelle 17 und der Beschleunigertrommel 16 sind ebenfalls entgegengesetzt (s.Pfeilrichtungen). Dabei ist der Beschleunigertrommel 16 ein weiteres Sieb 37 zugeordnet, das im Abstand zur Trommel 16 lagert und sich von der oberen Wand des Häckslers 14 zur Rückwand 35 erstreckt. Zwischen Rückwand 35 und Sieb 37 ist ebenfalls eine Rinne 19 gebildet mit darin gelagerter Förderschnecke 20, welche die Restkörner in einen seitlichen Schacht 38 transportiert und dem Wurfelevator 21 zuführt. Diese Anordnung der Beschleunigertrommel 16 erlaubt eine kleinere Bauweise bei noch besserer Trennung der Restkörner vom Stroh durch ein zusätzliches Sieb 37.

Das Ausführungsbeispiel nach Fig.4 zeigt den Häcksler 14 mit in der Wanne 15a befindlicher Messerwelle 17 und eine zu den Schüttlern 11 gerichtete obere Beschleunigertrommel 39, der ebenfalls ein Sieb 37 oberhalb zugeordnet ist. Diese Beschleunigertrommel 39 hat beispielsweise ein zylinderförmiges Rohr 40, an dem radial abstehende Mitnehmerfinger 41 befestigt sind, die im Abstand zu den Messern 28 der Messerwelle 17 stehen. Am unteren Ende des Siebes 37 kann hierbei eine als Deflektor ausgebildete Klappe 42 befestigt sein, die mittels einer Stellschraube 43 wie Handrad o.dgl. verstellbar sein kann. Durch Verengung des Durchlasses mittels der Klappe 42 läßt sich das Stroh verdichten, wodurch eine höhere Beschleunigung des Strohes bewirkt wird.

Die Fig.5 der Zeichnung zeigt eine weitere abgeänderte Ausführung der Beschleunigertrommel 39 bei gleicher Grundausbildung der Vorrichtung wie in Fig.1-3 in einem spitzen Winkel zu der senkrechten Achse der Messerwelle 17, der ebenfalls ein oberes, rückseitiges Sieb 37 zugeordnet ist. Dieses Sieb 37 endet untenseitig (wie in Fig.2 dargestellt) und geht in eine Rinne 19a über, in der eine Förderschnecke 20a lagert, die das Restkorn über einen geradlinig verlaufenden Schacht 38 dem Wurfelevator 21 zuführt. Der Beschleunigertrommel 39 ist bei diesem Ausführungsbeispiel eine Abscheidetrommel 44 zugeordnet, die auch von gezahnten Scheiben 23 und Distanzringen 26 gebildet sein kann. Hierbei wird das Stroh zusätzlich in seiner Richtung beschleunigt und umgelenkt.

Bei der in Fig.4 und 5 der Zeichnung dargestellten Beschleunigertrommel 39 können die Mitnehmer 41 an dem zylinderförmigen Rohr 40 pendelnd als Schlegel angelenkt sein, wodurch ein flexibleres Passieren des Strohes zwischen dem Sieb 37 und Klappe 42 während der Rotation erreicht wird.

In Fig.8 ist dieselbe Ausführung des in Fig.4 dargestellten rückseitigen Teiles eines Mähdreschers dargestellt. Die obere Beschleunigertrommel 39 ist mittels seitlicher Schwenkhebel 51 in Pfeilrichtung derart verschwenkbar gelagert, daß sich ihr Abstand von dem Sieb 15 vergrößert und somit einen größeren Durchgangsspalt für viel Stroh zwischen Sieb 15 und Beschleunigertrommel 39 bildet.

Dazu ist ebenfalls das obere Sieb 37 entsprechend der Pfeilrichtung nach oben schwenkbar gelagert, um Raum für die hochschwenkende Beschleunigertrommel 39 zu geben.

Dieser von der Messerwelle 17 und Messerkamm 31 gebildete Häcksler 14 gemäß Fig.1 bis 6 ist von einem Gehäuse 45 umgeben, an dessen Seitenwandungen die Messerwelle 17 und die Beschleunigertrommel 16, 39 lagern und das im vorderen Bereich zum Mähdrescher 10 hin offen ist. Um diese Öffnung ist ein umlaufender, rechtwinkliger nach außen gerichteter Flansch 46 angeordnet, in dem Bohrungen eingebracht sind, durch die zum Befestigen des Häckslers 14 am Mähdrescher 10 Schrauben 47 geführt sind. Eine derartige lösbare Befestigung ermöglicht eine leichte Montage des Häckslers 14 an unterschiedlichen Mähdreschertypen.

Gemäß Fig.6 der Zeichnung ist bei gleicher Grundausbildung gemäß Fig.1-3 anstelle eines als Leitfläche ausgebildeten Siebes 15, 15a eine Leitfläche 48 von mehreren nebeneinander angeordneten Stäben 49 gebildet, die von einer Quertraverse 50 gehalten sind. Die Quertraverse 50 erstreckt sich ebenfalls über die gesamte Breite des Häckslers 14; an diese Quertraverse 50 schließt sich untenseitig die Wanne 18 im Abstand an. Bei diesem Ausführungsbeispiel kann die Leitfläche 48 entsprechend der Anrodnung der Beschleunigertrommel 16, 39 - wie in Fig.2, 4 und 5 der Zeichnung dargestellt - auch geteilt ausgebildet sein. Dabei sind entsprechend zwei Quertraversen 50 im Abstand untereinander befestigt, an denen die Stäbe 49 befestigt sind. Die freien Enden der Stäbe 49 sind entsprechend der Messerwelle 17 bzw. der Beschleunigertrommel 16, 39 gebogen und führen damit das Stroh zu. Zwischen den Stäben 49 fallen die Restkörner hindurch und werden durch die Wand 18 ebenfalls aufgefangen und dem Wurfelevator 21 zugeführt.

Die Elastizität der federnden Stäbe 49 bewirkt somit einen vorteilhaften Fluß des Strohes zur Messerwelle 17, wobei im Übergangsbereich der geteilten und sich überlappenden Leitfläche 48 ein zusätzliches Auflockern des Strohes bewirkt wird.

Das Sieb 15 kann mit der Wanne 15a (oder auch ohne diese
Wanne 15a) in seiner Stellung, insbesondere seiner Neigung und/oder in seinem Abstand von der Stroh-Beschleunigertrommel (16) stufenweise oder stufenlos verstellbar gelagert sein.

Firma BISO Bitter GmbH & Co.KG, 4520 Melle 8

## Mähdrescher

## Patentansprüche

1. Mähdrescher mit einem das von Körnern befreite Stroh
zum rückwärten Ausgang transportierenden Schüttler
oder einer Dreschtrommel, denen ein am Mähdrescherausgang lösbar befestigter Häcksler mit Messerwelle
nachgeschaltet ist,
dadurch gekennzeichnet, daß der Messerwelle (17)
mindestens eine Stroh-Beschleunigertrommel (16) mit
im Abstand dazu gelagerten das ausfallende Restkorn
du-rchlassenden Siebflächen (13) unmittelbar vorgeschaltet ist.

- 2 -

0166116

2. Mähdrescher nach Anspruch 1, dadurch gekennzeichnet, daß die Stroh-Beschleunigertrommel (16) parallel zur Messerwelle (17) des Häckslers (14) und im Bereich des vom Schüttler (11) abfallenden Strohes gelagert ist.

3. Mähdrescher nach Anspruch 1 oder 2, dadurch gekennzeichnet, daß sich an den Schüttler (11) ein das Stroh der Stroh-Beschleunigertrommel (16) zuführendes, als Leitfläche ausgebildetes Sieb (15) anschließt, das den Abstand vom Schüttler (11) bis zum Messerkamm (31) des Häckslers (14) überbrückt und im Bereich der Stroh-Beschleunigertrommel (16) teilkreisförmig zu einer Wanne (15a) gebogen ist.

4. Mähdrescher nach den Ansprüchen 1 oder 2, dadurch gekennzeichnet, daß die Drehrichtung der Stroh-Beschleunigertrommel (16) mit der Fließrichtung des Strohes übereinstimmt und die Messerwelle (17) sich in Fließrichtung des Strohes dreht (Fig.1) oder die Drehrichtung sowohl der Beschleunigertrommel (16, 39) als auch der Messerwelle (17) entgegengesetzt der Fließrichtung des Strohes gerichtet ist.

5. Mähdrescher nach den Ansprüchen 1 bis 4, dadurch gekennzeichnet, daß unterhalb der Siebflächen (15, 15a) eine das ausfallende Korn dem Siebkasten (12) des Mähdreschers (10) zuführende Förderschnecke (20) mit Wurfelevator (21) angeordnet ist, die in einem rinnenförmigen Kanal (19) einer rückseitigen Wand (18) gelagert sind.

6. Mähdrescher nach den Ansprüchen 1 bis 5, dadurch gekennzeichnet, daß die Stroh-Beschleunigertrommel (16) von einzelnen Scheiben (23) mit diese im Abstand haltenden Distanzringen (26) gebildet ist, deren Durchmesser kleiner als derjenige der Scheiben (23) ist und die gemeinsam auf einer Keil-welle (27) verspannt lagern, wobei die Scheiben (23) auf ihrem Umfang mit Zähnen ausgebildet sind, die durch Ausstanzungen (24) halbkreisförmig, Spitzwinklig o.dgl. gebildet sind, und daß die Scheiben (23) gegenüber den Messern (28) der Messerwelle (17) versetzt in diese ineinandergreifen.

7. Mähdrescher nach den Ansprüchen 1 bis 6, dadurch gekennzeichnet, daß die Messerwelle (17) in dem teilkreisförmig gebogenen Teil des Siebes (15a) und die Stroh-Beschleunigertrommel (16) oberhalb der Messerwelle (17) lagert, wobei der Strohbeschleunigertrommel (16) ein weiteres, rückseitig sich erstreckendes Sieb (37) zugeordnet ist (Fig. 2, 4, 5, 8).

8. Mähdrescher nach den Ansprüchen 1 bis 7, dadurch gekennzeichnet, daß am unteren Ende des oberen Siebes (37) der Messerkamm (31) des Häckslers (14) sich anschließt, der abschwenkbar gelagert ist und über dem eine mit dem Sieb (37) übergehende Rinne (19a) gebildet ist, in der eine weitere, die Körner über einen seitlichen Schacht (38) zum Wurfelevator (21) fördernde Förderschnecke (20a) lagert (Fig.2).

9. Mähdrescher nach den Ansprüchen 1 bis 8, dadurch gekennzeichnet, daß die Stroh-Beschleunigertrommel (16) von einem zylinderförmigen Rohr (40) mit radial abstehenden Mitnehmerfingern (41) gebildet ist.

10. Mähdrescher nach den Ansprüchen 1 bis 9, dadurch gekennzeichnet, daß der im Abstand oberhalb der Messerwelle (17) gelagerten Stroh-Beschleunigertrommel (16) eine Abscheidetrommel (44) vorgelagert ist, die mit der Stroh-Beschleunigertrommel (39) im Eingriff steht.

11. Mähdrescher nach den Ansprüchen 1 bis 10, dadurch gekennzeichnet, daß die oberhalb der Wanne (18) angeordnete, als Sieb (15, 15a) gebildete Leitfläche für das Stroh von mindestens einer waagerechten Quertraverse (50) mit im Abstand nebeneinander daran befestigten Stäben (49) zu einer Leitfläche (48) gebildet ist, wobei die Stäbe (49) an einem Ende unterhalb der Stroh-Fließebene an der Quertraverse (50) gelenkig befestigt und deren andere Enden teilkreisförmig gebogen und frei federnd ausgebildet sind. (Fig. 6)

12. Mähdrescher nach den Ansprüchen 1 bis 11, dadurch gekennzeichnet, daß die Leitfläche (48) zweigeteilt ausgebildet ist, deren Quertraversene(50) jeweils an den Seitenwandungen des Gehäuses (45) befestigt sind, wobei die Quertraversen (50) gleichzeitig den Begrenzungsanschlag für die freien Enden der sich überlappenden Stäbe (49) bilden (vergl. Fig.6).

13. Mähdrescher nach den Ansprüchen 1 bis 12, dadurch gekennzeichnet, daß die der Messerwelle (17) mit Messerkamm (31) vorgelagerte Stroh-Beschleunigertrommel (16, 39) mit Sieb und/oder Leitflächen (15, 48) in dem Gehäuse (45) des Häckslers (14) gelagert ist.

14. Mähdrescher nach den Ansprüchen 1 bis 13, dadurch gekennzeichnet, daß die Wanne (15a) mit Führungsblech (30) abschwenkbar gelagert ist. (Fig.7)

15. Mähdrescher nach den Ansprüchen 1 bis 14, dadurch gekennzeichnet, daß die Beschleunigertrommel (39) gegenüber dem Sieb (15) verschwenkbar gelagert ist. (Fig.8 )

0166116

Fig.1

Fig. 2

Fig.6

0166116

Fig. 3

Fig. 4

Fig. 5

0166116

Fig.7

Fig.8